# EUROPÄISCHE PATENTSCHRIFT

(11) **EP 2 346 053 B1**
(45) Veröffentlichungstag und Bekanntmachung des Hinweises auf die Patenterteilung: **15.06.2016**
(21) Anmeldenummer: 10150987.5
(22) Anmeldetag: 18.01.2010
(51) Int. Cl.: H01F 27/04, H01F 38/26

(54) **Gasisolierte Hochspannungsmesseinheit**
Gas-isolated high voltage measuring unit
Unité de mesure haute tension isolée du gaz

(43) Veröffentlichungstag der Anmeldung: 20.07.2011
(73) Patentinhaber: ABB Technology AG, 8050 Zürich (CH)
(72) Erfinder: Saxl, David, 8046, Zürich (CH); Brandl, Florian, 8003, Zürich (CH)

(56) Entgegenhaltungen:
- EP-A2- 0 181 955
- EP-A2- 0 856 925
- CH-A5- 652 852
- DE-U1- 9 420 191

## Beschreibung

### TECHNISCHES GEBIET

Die vorliegende Erfindung betrifft einen Baustein einer gasisolierten Hochspannungs-Schaltanlage, auch GIS genannt, in Form eines gasisolierten Hochspannungseinheit, insbesondere eines Spannungswandlers. Hochspannungswandler dienen zur Erfassung von Spannungen an Primärleitern in einer GIS-Schaltanlage.

### TECHNOLOGISCHER HINTERGRUND UND STAND DER TECHNIK

Bei typischen GIS-Schaltanlagen werden die Spannungen der Phasenleiter, welche auf unterschiedlichen elektrischen Potentialen liegen, typischerweise in einem gasisolierten Hochspannungssensor, nachstehend auch Spannungswandler genannt, für alle Phasen gemeinsam oder in jeweils einem gasisolierten Hochspannungswandler pro Phase separat ermittelt. Einer gewissen Modularität der GIS-Schaltanlage folgend, weisen die Phasenleiter im Bereich der Hochspannungswandler in Querrichtung zur Leiterachse verlaufende Leiterstummel auf, die in einem Anschlussbereich beim Anschlussflansch des entsprechenden gekapselten Gehäuses der GT-S-Schaltanlage münden. Bei solchen GIS-Schaltanlagen weist die Spannungsmessungseinheit mit dem mindestens einen Spannungswandler typischerweise drei sich parallel zueinander erstreckende Primärphasenanschlüsse auf, welche jeweils mit einem Spannungstransformator zum Messen der jeweiligen Primärspannung verbunden sind. Die Primärphasenanschlüsse werden bei der Montage der Spannungsmessungseinheit an den Anschlussbereich der Leiterstummel angeschlossen. Anschliessend wird das metallgekapselte Gehäuse der Spannungsmessungseinheit mit Isoliergas, beispielsweise Schwefelhexafluorid gefüllt.

Bei einem ersten, weit verbreiteten Typ von gasisolierten Hochspannungs-Schaltanlagen werden die Primärleistungsverbindungen des Spannungswandlers bei der Montage an einen angrenzenden GIS-Baustein über eine Schraubverbindung verbunden. Sowohl der Spannungswandler, als auch der angrenzende GIS-Baustein weisen gehäuseseitig im Bereich der Primäranschlüsse Anschlussflansche auf. Bei der Montage werden diese Gehäuseflansche aneinander gepresst und eine dazwischen angeordnete Dichtung derart zusammengedrückt, dass eine Schnittstelle zwischen dem Gehäuse des GIS-Bausteins und dem Spannungswandler gasdicht abgedichtet ist. Typischerweise ist der Spannungswandler bei seiner Montage auf dem dafür vorgesehenen Anschlussmodul mit Isoliergas teilgefüllt, während der Anschlussmodul selber zum Zeitpunkt der Montage kein Isoliergas aufweist. Dies verlangt einerseits nach einer äusserst sorgfältigen Reinhaltung des offenen Anschlussmoduls sowie der Dichtfläche und dem Dichtring. Noch aufwändiger ist die Situation bei einem Austausch solcher Spannungswandler, da der zum Spannungswandler gerichtete Gasraum im Anschlussmodul zuerst eine Evakuation des Isoliergases und zumindest einen Druckausgleich mit einem klimaneutralen Gas wie Luft verlangt. Es versteht sich von selbst, dass die Montage sowie die Demontage von derartigen GIS-Modulen verhältnismässig arbeitintensiv ist, da eine Befüllung der gasisolierten Schaltanlage mit Isoliergas erst nach Abschluss der Montagearbeiten erfolgen kann. Ein Vertreter des ersten Typs ist beispielsweise in der EP0603619A1 offenbart.

Bei einem zweiten Typ von Hochspannungs-Schaltanlagen sind gewisse Anschlussmodule, wie beispielsweise ein Spannungssensor, in einem Feststoffisolator vergossen und über einen Steckkontakt mit einem Primärleiter eines GIS-Moduls verbindbar. Wenn der Spannungssensor einer Betriebsspannung von mehr als 50kV dauerhaft ertragen können muss, verlangt dies eine entsprechende Menge an Feststoffisolation, was leider erheblich zur Gesamtmasse des Anschlussmoduls beiträgt. Ein Vertreter eines solchen Typs ist beispielsweise in der DE4445082C1 offenbart. Das inhärente Problem dieser Ausführungsform liegt darin, dass sie die oft erforderlichen hohen Anforderungen an eine Teilentladungsbeständigkeit innerhalb der Feststoffisolation im Normalfall nicht erfüllen kann.

CH 652852 offenbart den Oberbegriff des Anspruchs 1.

### ZUSAMMENFASSUNG DER ERFINDUNG

Es ist eine Aufgabe der vorliegenden Erfindung, eine gasisolierte Hochspannungsmesseinheit im Allgemeinen und einen Hochspannungswandler im Besonderen vorzulegen, welcher einerseits eine verbesserte Montierbarkeit aufweist und andererseits ein vereinfachtes Montage- und Inbetriebsetzungsprozedere eines Schaltfeldes ermöglicht.

Diese Aufgabe wird mit dem Gegenstand nach Anspruch 1 gelöst. In einer Basisausführungsform weist die Hochspannungsmesseinheit einen gasisolierten Primärphasenanschluss in einem als Druckbehälter ausgeführten Gehäuse und mindestens einem Primärphasenanschluss auf. Jeder Primärphasenanschluss ist mit mindestens einer Messeinheit zum Messen einer Primärspannung des mindestens einen Primärphasenanschlusses verbunden. Der Gasraum ist derart mit einem Isoliergas gefüllt, dass der mindestens eine Primärphasenanschluss und die mindestens eine Messeinheit elektrisch isoliert im Gasraum angeordnet sind. Sinngemäss gilt dies auch für den Fall von Primärphasenanschlüssen unterschiedlichen Potentials im Betrieb als mehrphasig ausgeführte Hochspannungsmesseinheit. Der mindestens eine Primärphasenanschluss ist in einem Anschlussbereich der Hochspannungsmesseinheit elektrisch an ein benachbartes Modul anschliessbar. Der Gasraum ist im Anschlussbereich durch einen Isolierkörper begrenzt. Das Gehäuse der erfindungsgemässen Hochspannungsmesseinheit weist pro Primärphasenanschluss jeweils eine separate gehäuseseitige Anschlussöffnung auf, welche den jeweiligen Primärphasenanschluss umgreift und in einen flanschartigen Adapterabschnitt mündet.

Der flanschartige Adapterabschnitt dient zum mechanischen Anschliessen der Hochspannungsmesseinheit an den benachbarten Modul. Pro Primärphasenanschluss ist jeweils ein Teil einer lösbaren Steckverbindung in der Anschlussöffnung angeordnet, welche einerseits zum elektrischen Anschliessen der Primärphasenanschlüsse an Phasenanschlüsse des benachbarten Moduls dient, und andererseits den Gasraum gasdicht abschliesst. Der Gasraum weist pro Phasenleiter jeweils eine gehäuseseitige Anschlussöffnung im Gehäuse auf, welche den jeweiligen Phasenleiter umgreift und vorzugsweise in einen flanschartigen Adapterabschnitt mündet. Im Fall einer dreiphasigen Hochspannungsmesseinheit sind die Primärteile im Gasraum dadurch dreiphasig gekapselt und über die Steckverbindung jeweils einphasig aus der Hochspannungsmesseinheit herausgeführt. In jedem Fall dient je eine gehäuseseitige Anschlussöffnung zur separaten Aufnahme von einem einzigen Primärphasenanschluss. Unter dem Begriff ,einphasiger Isolator' wird ein elektrischer Isolator verstanden wird, durch welchen lediglich ein Nominalleiter (eine Primärphase) geführt ist.

In anderen Worten ausgedrückt, weist die Hochspannungsmesseinheit total mindestens zwei Steckverbindungen auf.

Je nach Ausführungsform ist die Steckverbindung als Trockensteckkontaktkupplung ausgeführt. Wenn die Steckverbindung als Trockensteckverbindung ausgebildet ist, ermöglicht dies ein Anschliessen der Hochspannungsmesseinheit an den benachbarten Modul (Anschlussmodul), ohne dass eine Isoliergasmanipulation wie etwa ein Evakuieren des Gasvolumens der Hochspannungsmesseinheit oder des benachbarten Moduls erforderlich ist. In der Folge ermöglich diese Ausführungsform einen wirtschaftlichen Reparatur- und (Wieder-) Inbetriebsetzungsprozess. Unter dem Begriff Trockensteckverbindung wird eine elektrisch isolierende Steckverbindung verstanden, welche eine Hochspannungsisolation an der Umgebungsluft ermöglicht. Dabei ist der Primäranschlusskontakt beziehungsweise Kontaktanschluss der Trockensteckverbindung elektrisch gegenüber typischerweise auf Erdpotential befindlichem Gehäuse durch einen Feststoffisolator isoliert. Je nach Ausführungsform der Trockensteckverbindung schmiegt sich an den Feststoffisolator und/oder den Kontaktanschluss ein Hochspannungsisolator aus einem duktilen, Isolationsmaterial wie etwa Silikon an. Mit anderen Worten ausgedrückt wird mittels im Adapterabschnitt beziehungsweise im Anschlussbereich der Steckverbindung eingefügter Dichtungen die erforderliche Gasdichtheit der Verbindung zwischen der Hochspannungsmesseinheit und dem Anschlussmodul gewährleistet. Beim Kuppelvorgang verdrängt das duktile Isolationsmaterial die Umgebungsluft weitestgehend aus der Steckkupplung.

Obwohl bereits eine Basisausführung der erfindungsgemässen Hochspannungsmesseinheit mit einem Gasraum für einen einzigen Primärphasenanschluss und einer Messeinheit zum Messen einer Primärspannung des Primärphasenanschlusses zu vielen, nachstehend genannten Vorteilen führt, ist die erfindungsgemässe Hochspannungsmesseinheit insbesondere bei einer mehrphasigen Ausführungsform, etwa einer dreiphasigen Hochspannungsmesseinheit mit drei im selben Gasraum untergebrachten Primärphasenanschlüssen und Messeinheiten, aus Gashandlings- und Gasüberwachungsgründen vorteilhaft.

Die Basisausführung der erfindungsgemässen Hochspannungsmesseinheit weist im Vergleich zu den bekannten Hochspannungsmesseinheit mehrere Vorteile auf, insbesondere, wenn die Steckkontaktverbindung bzw. -kupplung als Trockensteckverbindung ausgeführt ist. Ein erster Vorteil liegt darin, dass eine einzige Befüllung des Gasraums mit Isoliergas erforderlich ist. Eine Teilbefüllung oder Füllung mit anderem Gas wie etwa Kohlendioxid für Transport der Hochspannungsmesseinheit an ihren Bestimmungsort, etwa einer Unterstation, ist dadurch nicht mehr notwendig. Ein zweiter Vorteil liegt darin, dass die Hochspannungsmesseinheit bereits komplett vormontierbar als Vormontageeinheit prüfbar ist, da die gasdichte Isolation der Hochspannungsmesseinheit vor der Inbetriebsetzungsphase vollständig realisierbar ist. Dies ist wünschenswert, denn oft werden Hochspannungsmesseinheiten/Spannungswandler örtlich an anderem Ort, beispielsweise durch Zulieferer oder Dritte fernab vom Herstellungsort eines klassischen GIS-Schaltfeldes gefertigt. Der Spannungswandler trifft typischerweise bei der Montage auf das Schaltfeld zum ersten Mal auf seinen konkreten Einsatzort.

Ein dritter Vorteil liegt darin, dass der Druck im Gasraum der Hochspannungsmesseinheit während dem Transport und im Betrieb der gasisolierten Hochspannungsschaltanlage anders sein kann, als derjenige im benachbarten Modul, an welches die Hochspannungsmesseinheit anschliessbar ist. Dies ist insbesondere im Vergleich mit bekannten, scheibenförmigen Spannungswandlern bemerkenswert, welche aufgrund der grossen Fläche im Fall eines dreiphasigen Isolators eine stufenweise Erhöhung des Gasdruckes des Isoliergases erfordert. Es versteht sich von selbst, dass dies eine langwierige und daher wirtschaftlich uninteressante Nebenerscheinung dieses Standes der Technik ist. Ein Blick auf den Montageablauf der erfindungsgemässen Hochspannungsmesseinheit auf einem Anschlussmodul illustriert den kurzen, erforderlichen Montageablauf:
- Anschlussflanschflächen auf GIS-Modul reinigen
- Flanschartigen Adapterabschnitt der Hochspannungsmesseinheit reinigen
- Hochspannungsmesseinheit auf benachbarten GIS-Modul aufsetzen
- Befestigen der Hochspannungsmesseinheit an deren flanschartigem Adapterabschnitt an Nachbarmodul

Ein vierter Vorteil liegt darin, dass das Gewicht, das heisst die Masse der erfindungsgemässen Hochspannungsmesseinheit aufgrund der Gasisolation deutlich tiefer ist, als diejenige einer Hochspannungsmesseinheit mit einer Feststoffisolation.

Zusammengefasst ermöglicht erlaubt es die Steckkontaktierung der Primärteile bei der Montage des Spannungswandlers am benachbarten GIS-Bauteil bzw. Modul, die Montage- und Inbetriebsetzungsprozedere eines Schaltfeldes beträchtlich zu vereinfachen und zu beschleunigen.

Je nach Ausführungsform ist die Hochspannungsmesseinheit als Spannungswandler ausgebildet. Unter Spannungswandler wird eine Hochspannungsmessung mittels Wicklungen und einem Eisenkern verstanden, wie er etwa in der EP0603619A1 offenbart ist.

Wenn der Gasraum der Hochspannungsmesseinheit als Druckbehälter ausgelegt ist, welcher für einen Betrieb bei einem Nominaldruck von mindestens 2 bar (200000 Pa) im jeweiligen Gasraum ausgelegt sind, ist damit GIS-Hochspannungsmodule realisierbar. Im Betrieb ist die Hochspannungsmesseinheit in der Folge mit einem unter Druck stehenden Isoliergas gefüllt, welches je nach Spannungslevel beispielsweise unter 2, 6 oder mehr bar Druck steht.

Die erfindungsgemässe Hochspannungsmesseinheit ist mechanisch gut und wirtschaftlich an den benachbarten Modul anschliessbar, wenn das Gehäuse pro Primärphasenanschluss jeweils eine gehäuseseitige Anschlussöffnung aufweist, welche den jeweiligen Primärphasenanschluss umgreift und in einen flanschartigen Adapterabschnitt mündet. Die mechanische Befestigung der erfindungsgemässen Hochspannungsmesseinheit am Anschlussmodul erfolgt beispielsweise dadurch, dass sowohl der mindestens eine Adapterabschnitt, als auch ein flanschartig ausgebildeter Gegenflansch des Anschlussmoduls jeweils mit Durchgangslöchern zur Aufnahme einer Schraubverbindung versehen sind.

Sind die die flanschartigen Adapterabschnitte bei mindestens zwei Steckverbindungen in einer ersten Ebene angeordnet, lässt sich die Hochspannüngsmesseinheit auf dieser als Standfläche dienenden Ebene zumindest vorübergehend leicht abstellen, was sowohl bei der Montage, als auch bei der Inbetriebsetzung vorteilhaft ist. Beim Beispiel einer dreiphasigen Hochspannungsmesseinheit ist es hierbei nicht relevant, ob die Achsen der flanschartigen Adapterabschnitte alle in einer gemeinsamen zweiten Ebene liegen, oder ob sie in einer Dreieckanordnung zueinander angeordnet sind.

Im Fall einer mehrphasigen Hochspannungsmesseinheit bildet bei mindestens zwei Steckverbindungen der Hochspannungsmesseinheit jede Steckverbindung einen Bestandteil des Isolierkörpers um im Betrieb der Hochspannungsmesseinheit den jeweiligen Primärphasenanschluss elektrisch gegen das Gehäuse zu isolieren. Durch die Aufteilung des Isolierkörpers in mehrere Teilisolierkörper ist die Druckbelastung des Isolierkörpers pro Fläche im Vergleich zu einem scheibenförmigen, dreiphasigen Isolator erheblich verringerbar.

Sind die flanschartigen Adapterabschnitte einer Hochspannungsmesseinheit, welche mehrere Steckverbindungen aufweist, gleichzeitig als Abstellfläche zum Zwischenlagern eines Moduls vorgesehen, etwa während der Montage, so ist es vorteilhaft, wenn die Steckverbindungen in einer zweiten Ebene angeordnet sind. Die zweite Ebene ist quer zur ersten Ebene angeordnet, insbesondere rechtwinklig zur ersten Ebene. Dadurch liegen die jeweiligen Mitten der Anschlussöffnungen auf einer gemeinsamen, ersten Gerade. Ein weiterer Vorteil dieser Ausführungsform liegt in der weiter erhöhten vielseitigen Verwendbarkeit der Module, welche eine optimale Modularität gewährleisten.

In einer Ausbildungsform der gasisolierten Hochspannungsmesseinheit weist diese mindestens drei Phasenleiter bzw. Primärphasenanschlüsse auf. Dabei sind die mindestens drei Steckverbindungen in einem regelmässigen Abstand voneinander entfernt entlang der ersten Gerade in der ersten Ebene angeordnet, was die vielseitige Anwendung ermöglicht, etwa einen um 180 Grad verdrehten Einbau gegenüber dem benachbarten Anschlussmodul (z.B. dem zweiten Modul).

Bei einer Ausführungsform der gasisolierten Hochspannungsmesseinheit sind die Adapterabschnitte von mindestens zwei Anschlussöffnungen desselben Moduls jeweils zumindest teilweise in einen gemeinsamen Adapterabschnitt integriert. Dies erlaubt beispielsweise eine vereinfachte Bearbeitung der Anschlussflächen nach dem Giessen des Gehäuses der Hochspannungsmesseinheit, verbunden mit einer typischerweise verbesserten Form- und Masshaltigkeit. Ein weiterer Vorteil liegt in der guten Zugänglichkeit zum Adapterabschnitt bei der Montage.

Je nach Ausführungsform der Steckverbindung weist diese pro Leiter/Phase jeweils ein weibliches und ein männliches Kupplungsteil auf. So weist beispielsweise die Steckverbindung ein Buchsenelement und einen elektrisch damit verbindbares, beziehungsweise verbundenes, Kontaktelement auf, wobei das Buchsenelement am Adapterabschnitt der Hochspannungsmesseinheit befestigt ist und das als stiftförmiger Kontaktanschluss ausgebildete Kontaktelement am Adapterabschnitt des benachbarten Moduls (Anschlussmoduls) befestigt ist.

Mit einer Ausführungsform eines mehrphasig, beispielsweise dreiphasig gekapselten Hochspannungsmesseinheit und Anschlussmoduls ist eine Codierung der Montageposition der Hochspannungsmesseinheit mit dem Anschlussmoduls erzielbar, wenn beispielsweise zwei Phasen R, S des ersten Moduls Buchsenelemente und eine Phase T einen stiftförmiger Kontaktanschluss als Steckverbindungsanschlüsse aufweisen, während die zwei entsprechenden Phasen R, S des zweiten Moduls als Stiftkontakte ausgebildet sind, während die dritte Phase T des Anschlussmoduls als Buchsenelement ausgeführt ist. Mit einer derartigen Konfiguration ist es möglich, eine narrensichere Montage der Hochspannungsmesseinheit am Anschlussmodul zuverlässig gewährleisten zu können, selbst wenn wenig geschultes Personal die Montage übernehmen sollte.

Insbesondere bei einer Hochspannungsmesseinheit nach der vorliegenden Erfindung, welche lediglich einen einzigen Primäranschluss aufweist, ist eine alternative mechanische Befestigung der Hochspannungsmesseinheit am Anschlussmodul denkbar. Bei dieser Ausführungsform weist entweder der Hochspannungsmesseinheit-seitige oder der Anschlussmodul-seitige Teil der als Leistungskupplung für elektrische Leitungen ausgebildeten Steckverbindung flanschseitig Befestigungspunkte auf, welche von einem Gegenflansch des Anschlussmoduls beziehungsweise der Hochspannungsmesseinheit her zugänglich sind. In einer Ausführungsform einer solchen Befestigung weist der Anschlussmodul-seitige Teil der Steckverbindung stirnseitig zugängliche Innengewindebuchsen auf, während der flanschartige Adapterabschnitt des Gehäuses der Hochspannungsmesseinheit Durchgangslöcher zum Einführen einer Schraube aufweist.

Alternativ oder in Kombination ist der Adapterabschnitt beziehungsweise sind die Adapterabschnitte der Hochspannungsmesseinheit mit mindestens einer Klemmverbindung mit dem benachbarten Modul verbindbar. Je nach Anforderungen und Gegebenheiten umgreift eine Klemmverbindung beziehungsweise Klemmverbindungen den Adapterabschnitt oder die Adapterabschnitte umfangsseitig zumindest teilweise.

Wenn die mindestens eine Steckverbindung eine Feldsteuerelektrode aufweist, muss die mindestens eine Steckverbindung beziehungsweise die Hochspannungsmesseinheit im Unterschied zur Basisvariante entsprechend angepasst werden, um die elektrischen Anforderungen bezüglich der Isolation erfüllen zu können.

Als Alternative zu einer Ausführungsform der Hochspannungsmesseinheit als Hochspannungswandler zum Messen einer Hochspannung kann eine weitere Ausführungsform der Hochspannungsmesseinheit mindestens einen kapazitiven Spannungsteiler aufweisen.

Die im Zusammenhang mit der Hochspannungsmesseinheit genannten Vorteile und Effekte gelten sinngemäss für eine gasisolierte Schaltanlage mit mindestens einer erfinderischen Hochspannungsmesseinheit.

### KURZE BESCHREIBUNG DER ZEICHNUNG

In der Zeichnung sind Ausführungsbeispiele der Erfindung rein schematisch dargestellt. Dabei zeigt:
- Fig. 1: einen Längsschnitt durch eine erste Ausführungsform einer Hochspannungsmesseinheit für drei Phasen mit einer Steckverbindung zur leistungsseitige Kupplung mit einem benachbarten, gasisolierten Modul;
- Fig. 2: einen vereinfacht dargestellten Gehäusequerschnitt der ersten Ausführungsform entlang der Schnittebene II-II in Figur 1;
- Fig. 3: einen Längsschnitt durch eine zweite Ausführungsform einer Hochspannungsmesseinheit für drei Phasen mit einer Steckverbindung zur leistungsseitige Kupplung mit einem benachbarten, gasisolierten Modul; und
- Fig. 4: eine dreidimensionale Ansicht des in Figur 3 gezeigten Hochspannungsmesseinheit aus der Richtung A.

### WEGE ZUR AUSFÜHRUNG DER ERFINDUNG

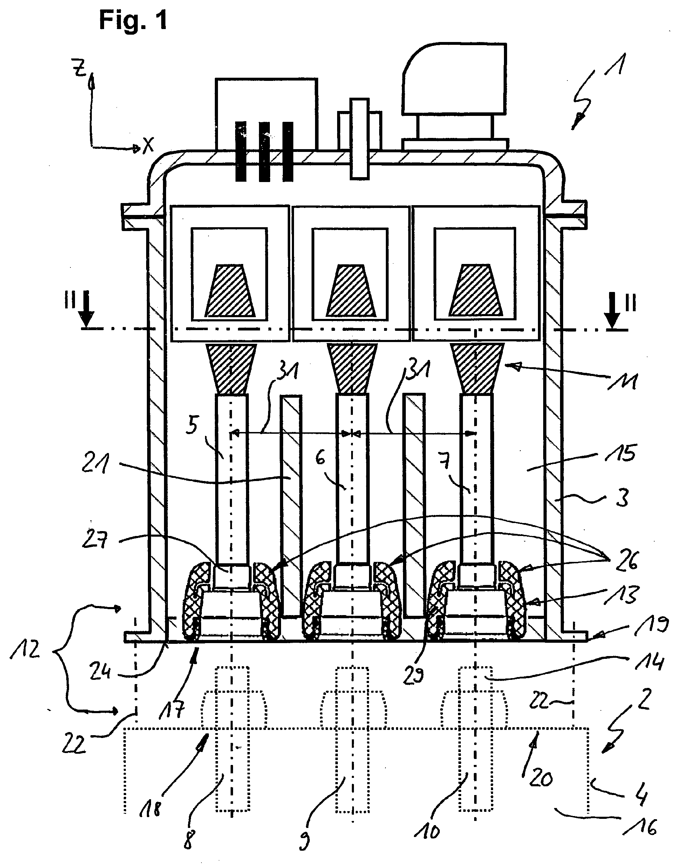

Der Längsschnitt durch eine erste Ausführungsform zweier dreiphasig gekapselter HV-GIS-Module in entkuppeltem Zustand von **Figur 1** zeigt eine gasisolierte Hochspannungsmesseinheit 1, welche mit einem benachbarten Modul 2, nachstehend auch zweiter Modul genannt, verbindbar ist.

Die Hochspannungsmesseinheit ist als Spannungswandler ausgebildet, während der benachbarte Modul 2, welcher lediglich in dessen Anschlussbereich gezeigt ist, beispielsweise einen Verbindungsmodul in einem gasisolierten Schaltfeld darstellt. Beide Module verfügen jeweils über ein Gehäuse 3, 4. Das Gehäuse 4 umfasst drei Nominalleiteranschlüsse (Phasenleiter) 5, 6, 7 auch Primärphasenanschlüsse genannt, welche sich in Z-Richtung erstrecken. Das Gehäuse 3 umfasst ebenfalls drei entsprechende Nominalleiteranschlüsse (Phasenleiter / Primärphasenanschlüsse) 8, 9, 10, welche mit entsprechenden, als Messwandlern ausgeführten Messeinheiten 11 verbunden sind. Die Phasenleiter 5, 6, 7 des ersten Moduls sind mit den stilisiert dargestellten Phasenleitern 8, 9, 10 des zweiten Moduls 2 über jeweils eine Steckverbindung 12 pro Phase elektrisch miteinander verbindbar. Die elektrische Verbindung der Phasenleiter 5, 6, 7 der Hochspannungsmesseinheit mit den Phasenleitern 8, 9, 10 des zweiten Moduls 2 erfolgt ausschliesslich über die Steckverbindungen 12. Bei der in Figur 1 gezeigten Ausführungsform der Module 1, 2 weisen die Primärphasenanschlüsse der Hochspannungsmesseinheit endseitig je ein Buchsenelement 13 auf, während die Primärphasenanschlüsse des Anschlussmoduls 2 endseitig als komplementären Teil der jeweiligen Steckverbindungen 12 einen stiftförmigen Kontaktanschluss 14 als männlichen Teil aufweisen. In einer Basisvariante ist ein isolierender Abschnitt des Buchsenelementes 13 aus Giessharz gefertigt, während eine leitende, metallische Steckerbuchse 15 als Nominalleiteranschluss des Buchsenelements 13 dient. Je nach Anforderungen sind anstelle des Giessharzes andere, geeignete Materialen jedoch dafür einsetzbar. Die elektrische Verbindung der Steckverbindungen 12 erfolgt über die Steckerbuchse 15 und den ebenfalls metallischen Kontaktanschluss 27.

In Figur 1 ist der besseren Darstellbarkeit wegen die Hochspannungsmesseinheit 1 und der zweite Modul 2 während deren Montage aneinander gezeigt.

Die Gehäuse 3, 4 begrenzen jeweils einen Gasraum 15, 16 eines jeden Moduls 1, 2 und münden pro Primärphasenanschluss jeweils in einer gehäuseseitigen Anschlussöffnung 17, 18, welche den jeweiligen Primärphasenanschluss umgreift und in einem flanschartigen Adapterabschnitt 19, 20 mündet.

Die beiden flanschartigen Adapterabschnitte 19, 20 sind beispielsweise über eine vereinfacht dargestellte Schraubverbindung 22 mechanisch miteinander verbindbar.

Die flanschseitige Abdichtung der Gasräume 15, 16 erfolgt über Isolationsabschnitte der Buchsenelemente 13, welche im Betrieb gleichzeitig die elektrische Isolation des Primärphasenanschlusses gegen Masse - sprich die Gehäuse 3, 4 - gewährleisten.

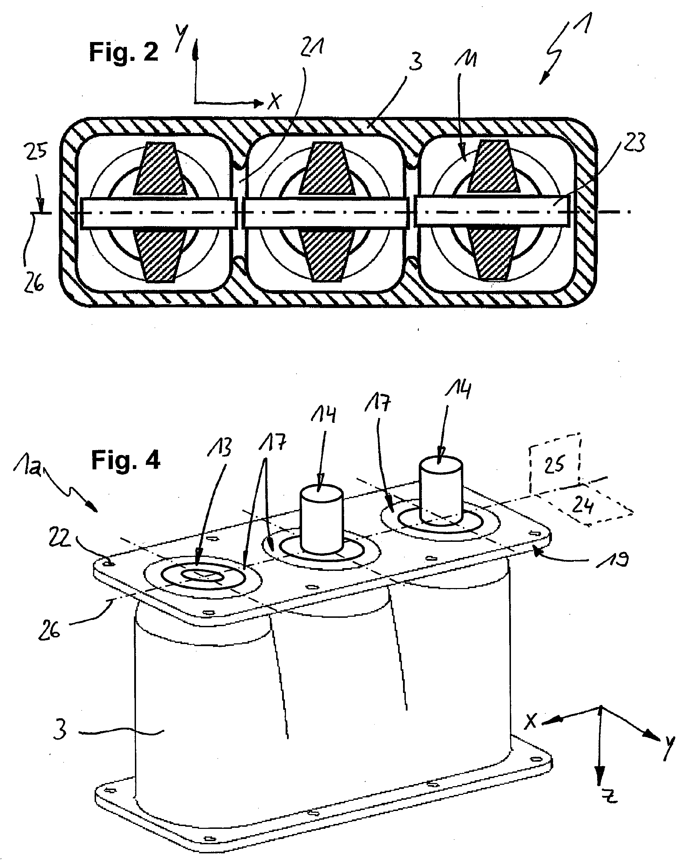

Aus Figur 1 geht weiter hervor, dass die Buchsenelemente 13 alle innerhalb einer sich in einer ersten Ebene 24 erstreckenden Konturlinie angeordnet sind. In Zusammenschau mit Figur 4 wird ersichtlich, dass die sich die erste Ebene 24 als Abstellfläche zum Zwischenlagern der Hochspannungsmesseinheit, etwa während der Montage, bestens anbietet. Zudem sind bei dieser Variante die Primärleiteranschlüsse, beziehungsweise Steckkontaktteile verhältnismässig gut gegen äussere Störeinflüsse wie Schläge und dergleichen geschützt.

In Zusammenschau mit **Figur 2** wird die in Figur 1 gezeigte Gehäuseform der Hochspannungsmesseinheit besser ersichtlich. Der in Figur 2 vereinfacht dargestellte Gehäusequerschnitt der ersten Ausführungsform entlang der Schnittebene II-II in Figur 1 verläuft in Richtung der XY-Ebene beziehungsweise XY-Richtung. Der gemeinsame Gasraum 15 der Hochspannungsmesseinheit 1 ist gegen den flanschartigen Adapterabschnitt 19 hin durch Gehäuserippen 21 wie drei einphasig gekapselte Primärphasenanschlüsse gestaltet, wobei die dadurch entstandenen Gasräume auf einer dem flanschartigen Adapterabschnitt 19 abgewandten Ende der Hochspannungsmesseinheit 1 hydraulisch in einen einzigen Gasraum 15 münden. In Figur 2 sind die drei als Messwandler dienenden Wicklungen 11 mit einem jeweiligen Eisenkern 23 gezeigt, wobei die Eisenkern 23 nicht geschnitten dargestellt sind.

In Figur 2 sind die drei Messeinheiten 11 beziehungsweise Messwandler 11 mit ihren jeweiligen Wicklungen und Eisenkernen 23 gezeigt, wobei die Eisenkerne 23 nicht geschnitten dargestellt sind.

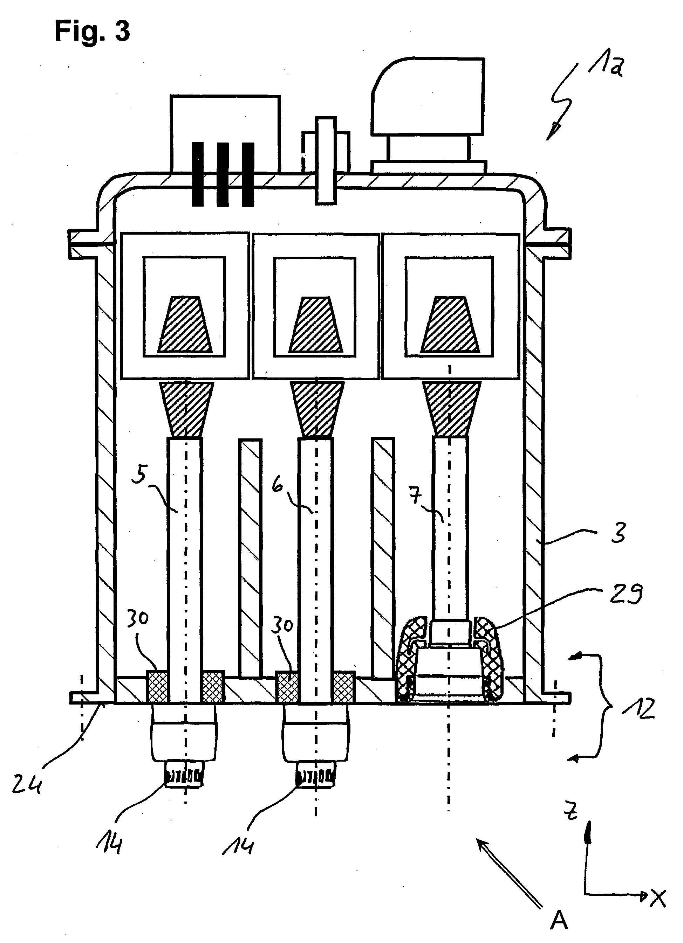

In der **Figur 3** ist eine zweite Ausführungsform der Hochspannungsmesseinheit ähnlich der ersten Ausführungsform von Figur 1 gezeigt. Aufgrund dieser Ähnlichkeit wird nachfolgend nur auf die Unterschiede zur Figur 1 eingegangen. Gleiche oder gleich wirkende Elemente sind mit denselben Bezugszeichen versehen.

Anders als bei der ersten Ausführungsform der Hochspannungsmesseinheit weist die zweite Ausführungsform der Hochspannungsmesseinheit 1a sowohl weibliche, als auch männliche Kontakteile der Steckverbindung 12 auf. Die dadurch erzielte Codierung erlaubt bei der Montage der Hochspannungsmesseinheit 1a am benachbarten Modul 2 eine zweifelsfreie Einbaulage. Dadurch können potentielle Fehler von verwechselten Phasen (5, 7), beispielsweise verwechselte R und T-Phasen zum Vornherein sicher ausgeschlossen werden.

Wie aus den in Figur 3 gezeigten Positionen der Steckverbindung 12 hervorgeht, weisen der Primärphasenanschluss links und in der Mitte jeweils einen stiftförmigen Kontaktanschluss 14 auf, während nur der Primärphasenanschluss rechts ein Buchsenelement 13 aufweist. Sowohl der stiftförmigen Kontaktanschluss 14, als auch das Buchsenelement 13 bilden Teile der lösbaren Steckverbindung 12.

Es versteht sich von selbst, dass die unterschiedlich geformten Elemente 13, 14 unterschiedliche Isolatoren zur elektrischen Isolation der Primärteile gegen Masse (Gehäuse) erfordern. Der mehrteilig ausgeführte Isolationskörper umfasst beim Primärphasenanschluss 7 rechts ein becherförmiges Isolationselement 29, während die stiftförmigen Kontaktanschlüsse 14 des linken und mittleren Primärphasenanschlusses 5, 6 in einer Basisausführungsform beispielsweise lediglich eine Isolationshülse 30 aufweist. Sowohl das becherförmige Isolationselement 29, als auch die Isolationshülse 30 bilden gasdichte, feste Verbindungen des elektrischen Isolators zum Gehäuse 3 im Bereich des flanschartigen Adapterabschnittes 19. Anders ausgedrückt, bilden die Isolationshülse 30 und das becherförmige Isolationselement 29 gemeinsam den Isolationskörper der Hochspannungsmesseinheit 1a.

Aus der dreidimensionalen Ansicht der in **Figur 4** gezeigten Hochspannungsmesseinheit la geht in Zusammenschau mit Figur 2 weiter hervor, dass die drei stilisiert dargestellten Teile der Steckverbindung 12 in einer zweiten Ebene 25 angeordnet sind. Da sich die in XY-Richtung beziehungsweise XY-Ebene erstreckende erste Ebene 24 rechtwinklig zur in XZ-Richtung erstreckenden, zweiten Ebene 25 erstreckt, entsteht eine sich in X-Richtung erstreckende Schnittgerade. In der Folge liegen die jeweiligen Mitten der Anschlussöffnungen 17 auf einer gemeinsamen, ersten Geraden 26 in einem regelmässigen Abstand 31 voneinander entfernt angeordnet.

### BEZUGSZEICHENLISTE

- 1, 1a: Hochspannungsmesseinheit
- 2: zweiter Modul, benachbarter Modul
- 3: Gehäuse der Hochspannungsmesseinheit
- 4: Gehäuse des zweiten Moduls
- 5,6,7: Primärphasenanschluss der Hochspannungsmess: einheit
- 8,9,10: Primärphasenanschluss des zweiten Moduls
- 11: Messwandler
- 12: Steckverbindung
- 13: Buchsenelement, buchsenförmiger Gegenkontakt
- 14: Stiftförmiger Kontaktanschluss
- 15: Gasraum der Hochspannungsmesseinheit
- 16: Gasraum des zweiten Moduls
- 17, 18: Gehäuseseitige Anschlussöffnungen
- 19: Flanschartiger Adapterabschnitt der Hoch-] spannungsmesseinheit
- 20: Flanschartiger Adapterabschnitt des 2. Moduls
- 21: Gehäuserippe
- 22: Schraubverbindung
- 23: Eisenkern
- 24: Erste Ebene
- 25: Zweite Ebene
- 26: Gerade / gerade Linie
- 27: Kontaktanschluss
- 29: Becherförmiges Isolationselement
- 30: Isolationshülse
- 31: Regelmässiger Abstand

## Patentansprüche

1. Gasisolierte Hochspannungsmesseinheit (1, 1a) zum Messen einer Hochspannung, mit einem als Druckbehälter ausgeführten Gehäuse (3) und mindestens einem Primärphasenanschluss (5,6,7), welcher mit mindestens einer Messeinheit (11) zum Messen einer Primärspannung des mindestens einen Primärphasenanschlusses (5,6,7) verbunden ist, wobei ein Gasraum (15) des Gehäuses (3) im Betrieb der Hochspannungsmesseinheit (1,1a) derart mit einem Isoliergas gefüllt ist, dass der mindestens eine Primärphasenanschluss (5,6,7) elektrisch isoliert im Gasraum (15) angeordnet ist, und wobei der mindestens eine Primärphasenanschluss (5,6,7) in einem Anschlussbereich elektrisch an ein benachbartes Modul (2) anschliessbar ist, und wobei der Gasraum (15) im Anschlussbereich durch einen Isolierkörper begrenzt ist, **dadurch gekennzeichnet, dass** jeder Primärphasenanschluss (5,6,7) jeweils einen Teil (13,14) einer lösbaren Steckverbindung (12) aufweist, welche in einer separaten Anschlussöffnung (17) des Gehäuses (3) angeordnet ist, wobei die Steckverbindung (12) einerseits Bestandteil einer Steckkontaktkupplung zum elektrischen Anschliessen des Primärphasenanschlusses (5,6,7) an einen entsprechenden Primärphasenanschlusses des benachbarten Moduls (8,9,10) ist, und andererseits dazu dient, den Gasraum (15) nach Aussen hin gasdicht abzuschliessen,
wobei der Teil (13,14) der lösbaren Steckverbindung (12) derart an der Hochspannungsmesseinheit (1,1a) angeordnet ist, dass er von ausserhalb der Hochspannungsmesseinheit (1, 1a) her zugänglich ist, und
wobei die mindestens eine Steckverbindung (12) eine Trockensteckverbindung ist.

2. Hochspannungsmesseinheit nach Anspruch 1, **dadurch gekennzeichnet, dass** der Druckbehälter für einen Betrieb bei einem Nominaldruck von mindestens 2 bar im Gasraum (15) ausgelegt ist.

3. Hochspannungsmesseinheit nach Anspruch 1 oder 2, **dadurch gekennzeichnet, dass** das Gehäuse (3) pro Primärphasenanschluss (5,6,7) jeweils eine gehäuseseitige Anschlussöffnung (17) aufweist, welche den jeweiligen Primärphasenanschluss (5,6,7) umgreift und in einen flanschartigen Adapterabschnitt (19) mündet, welcher zum mechanischen Anschliessen der Hochspannungsmesseinheit (1, 1a) an den benachbarten Modul (2) dient.

4. Hochspannungsmesseinheit nach einem der Ansprüche 1 bis 3, **dadurch gekennzeichnet, dass** die flanschartigen Adapterabschnitte (19) bei mindestens zwei Steckverbindungen (12) in einer ersten Ebene (24) liegen.

5. Hochspannungsmesseinheit nach einem der Ansprüche 1 bis 4, **dadurch gekennzeichnet, dass** bei mindestens zwei Steckverbindungen der Hochspannungsmesseinheit (1, 1a) jede Steckverbindung (12) einen Bestandteil des mehrteiligen Isolierkörpers (29, 30) bildet, um im Betrieb der Hochspannungsmesseinheit (1, 1a) den jeweiligen Primärphasenanschluss elektrisch gegen das Gehäuse (3) zu isolieren.

6. Hochspannungsmesseinheit nach Anspruch 4 oder 5, **dadurch gekennzeichnet, dass** die flanschartigen Adapterabschnitte (19) bei mindestens zwei Steckverbindungen (12) parallel zueinander verlaufend in einer zweiten Ebene (25) angeordnet sind, wobei die zweite Ebene (25) quer zur ersten Ebene (24) angeordnet ist, insbesondere rechtwinklig zur ersten Ebene (24).

7. Hochspannungsmesseinheit nach einem der Ansprüche 1 bis 6, **dadurch gekennzeichnet, dass** die Hochspannungsmesseinheit (1,1a) mindestens drei Primärphasenanschlüsse (5,6,7) aufweist.

8. Hochspannungsmesseinheit nach Anspruch 7, **dadurch gekennzeichnet, dass** die mindestens drei Primärphasenanschlüsse (5,6,7) in der ersten Ebene (24) in einem regelmässigen Abstand (31) voneinander entfernt angeordnet sind.

9. Hochspannungsmesseinheit nach einem der Ansprüche 1 bis 8, **dadurch gekennzeichnet, dass** die Adapterabschnitte (19) von mindestens zwei Anschlussöffnungen (17) jeweils zumindest teilweise in einen gemeinsamen Adapterabschnitt (19) integriert sind.

10. Hochspannungsmesseinheit nach einem der Ansprüche 1 bis 9, **dadurch gekennzeichnet, dass** die mindestens eine Steckverbindung (12) einen stiftförmigen Kontaktanschluss (14) zum Einfahren in einen buchsenförmigen Gegenkontakt (13) des benachbartes Modul (2) aufweist, wobei der stiftförmige Kontaktanschluss (14) am Adapterabschnitt (19) befestigt ist.

11. Hochspannungsmesseinheit nach einem der Ansprüche 1 bis 10, **dadurch gekennzeichnet, dass** mindestens eine Steckverbindung (12) ein Buchsenelement (13) zur Aufnahme eines stiftförmigen Gegenkontaktes (14) des benachbarten Moduls (2) aufweist, wobei das Buchsenelement (13) am Adapterabschnitt (19) befestigt ist.

12. Hochspannungsmesseinheit nach Anspruch 1, **dadurch gekennzeichnet, dass** die Hochspannungsmesseinheit als Spannungswandler (1, 1a) ausgebildet ist.

13. Gasisolierte Schaltanlage mit mindestens einer Hochspannungsmesseinheit (1,1a) nach einem der Ansprüche 1 bis 12.

## Claims

1. Gas-insulated high-voltage measuring unit (1, la) for measuring a high voltage, comprising a housing (3) constructed as a pressure vessel and at least one primary phase terminal (5, 6, 7) which is connected to at least one measuring unit (11) for measuring a primary voltage of the at least one primary phase terminal (5, 6, 7), a gas space (15) of the housing (3) being filled with an insulating gas, in the operation of the high-voltage measuring unit (1, 1a), in such a manner that the at least one primary phase terminal (5, 6, 7) is arranged electrically insulated in the gas space (15), and the at least one primary phase terminal (5, 6, 7) being able to be electrically connected to an adjacent module (2) in a connecting area, and the gas space (15) being confined by an insulating body in the connecting area, **characterized in that** each primary phase terminal (5, 6, 7) in each case exhibits a part (13, 14) of a detachable plug-in connection (12), which is arranged in a separate connecting opening (17) of the housing (3), the plug-in connection (12), on the one hand being a component of a plug-in contact coupling for electrically connecting the primary phase terminal (5, 6, 7) to a corresponding primary phase terminal of the adjacent module (8, 9, 10) and, on the other hand, being used for closing off the gas space (15) in a gastight manner towards the outside,
wherein the part (13, 14) of the detachable plug-in connection (12) is arranged on the high-voltage measuring unit (1, 1a) such that it is accessible from outside the high-voltage measuring unit (1, 1a), and wherein the at least one plug-in connection (12) is a dry plug-in connection.

2. High-voltage measuring unit according to Claim 1, **characterized in that** the pressure vessel is designed for an operation at a nominal pressure of at least 2 bar in the gas space (15).

3. High-voltage measuring unit according to Claim 1 or 2, **characterized in that** the housing (3) in each case exhibits per primary phase terminal (5, 6, 7) one connecting opening (17) on the housing side, which encompasses the respective primary phase terminal (5, 6, 7) and opens into a flange-like adapter section (19) which is used for mechanically connecting the high-voltage measuring unit (1, 1a) to the adjacent module (2).

4. High-voltage measuring unit according to one of Claims 1 to 3, **characterized in that** the flange-like adapter sections (19) are located in a first plane (24) in the case of at least two plug-in connections (12).

5. High-voltage measuring unit according to one of Claims 1 to 4, **characterized in that** each plug-in connection (12) forms a component of the multipart insulating body (29, 30) in the case of at least two plug-in connections of the high-voltage measuring unit (1, 1a) in order to insulate the respective primary phase terminal electrically with respect to the housing (3) in the operation of the high-voltage measuring unit (1, 1a).

6. High-voltage measuring unit according to Claim 4 or 5, **characterized in that** the flange-like adapter sections (19) are arranged extending in parallel with one another in a second plane (25) in the case of at least two plug-in connections (12), the second plane (25) being arranged transversely to the first plane (24), particularly at right angles to the first plane (24).

7. High-voltage measuring unit according to one of Claims 1 to 6, **characterized in that** the high-voltage measuring unit (1, 1a) exhibits at least three primary phase terminals (5, 6, 7).

8. High-voltage measuring unit according to Claim 7, **characterized in that** the at least three primary phase terminals (5, 6, 7) are arranged in the first plane (24) spaced apart from one another at a regular distance (31).

9. High-voltage measuring unit according to one of Claims 1 to 8, **characterized in that** the adapter sections (19) of at least two connecting openings (17) are in each case integrated at least partially in a common adapter section (19).

10. High-voltage measuring unit according to one of Claims 1 to 9, **characterized in that** the at least one plug-in connection (12) exhibits a pin-shaped contact terminal (14) for insertion into a socketshaped countercontact (13) of the adjacent module (2), the pin-shaped contact terminal (14) being attached to the adapter section (19).

11. High-voltage measuring unit according to one of Claims 1 to 10, **characterized in that** at least one plug-in connection (12) exhibits a socket element (13) for accommodating a pin-shaped countercontact (14) of the adjacent module (2), the socket element (13) being attached to the adapter section (19).

12. High-voltage measuring unit according to Claim 1, **characterized in that** the high-voltage measuring unit is constructed as a voltage transformer (1, 1a).

13. Gas-insulated switchgear system comprising at least one high-voltage measuring unit (1, 1a) according to one of Claims 1 to 12.

## Revendications

1. Unité de mesure de haute tension (1, 1a) à isolement gazeux destinée à mesurer une haute tension, comprenant un boîtier (3) réalisé sous la forme d'un récipient sous pression et au moins une borne de phase primaire (5, 6, 7), laquelle est reliée à au moins une unité de mesure (11) en vue de mesurer une tension primaire de l'au moins une borne de phase primaire (5, 6, 7), un espace à gaz (15) du boîtier (3), lors du fonctionnement de l'unité de mesure de haute tension (1, 1a), étant rempli d'un gaz isolant de telle sorte que l'au moins une borne de phase primaire (5, 6, 7) est disposée de manière électriquement isolée dans l'espace à gaz (15), et l'au moins une borne de phase primaire (5, 6, 7) pouvant être raccordée électriquement dans une zone de raccordement à un module voisin (2), et l'espace à gaz (15) dans la zone de raccordement étant délimité par un corps isolant, **caractérisée en ce que** chaque borne de phase primaire (5, 6, 7) possède respectivement une partie (13, 14) d'un connecteur à enficher (12) détachable qui est disposé dans une ouverture de raccordement (17) séparée du boîtier (3), le connecteur à enficher (12) faisant d'un côté partie d'un couplage par contact à enficher destiné au raccordement électrique de la borne de phase primaire (5, 6, 7) à une borne de phase primaire correspondante du module (8, 9, 10) voisin et, d'un autre côté, servant à fermer l'espace à gaz (15) de manière hermétique au gaz par rapport à l'extérieur,
la partie (13, 14) du connecteur à enficher (12) détachable étant disposée sur l'unité de mesure de haute tension (1, 1a) de telle sorte qu'elle est accessible depuis l'extérieur de l'unité de mesure de haute tension (1, 1a) et
l'au moins un connecteur à enficher (12) étant un connecteur à enficher à sec.

2. Unité de mesure de haute tension selon la revendication 1, **caractérisée en ce que** le récipient sous pression est conçu pour un fonctionnement avec une pression nominale d'au moins 2 bar dans l'espace à gaz (15).

3. Unité de mesure de haute tension selon la revendication 1 ou 2, **caractérisée en ce que** le boîtier (3) possède pour chaque borne de phase primaire (5, 6, 7) à chaque fois une ouverture de raccordement (17) côté boîtier qui enveloppe la borne de phase primaire (5, 6, 7) correspondante et débouche dans une portion d'adaptation (19) de type bride, laquelle sert au raccordement mécanique de l'unité de mesure de haute tension (1, 1a) au module (2) voisin.

4. Unité de mesure de haute tension selon l'une des revendications 1 à 3, **caractérisée en ce que** les portions d'adaptation (19) de type bride, sur au moins deux connecteurs à enficher (12), se trouvent dans un premier plan (24).

5. Unité de mesure de haute tension selon l'une des revendications 1 à 4, **caractérisée en ce que** sur les au moins deux connecteurs à enficher de l'unité de mesure de haute tension (1, 1a), chaque connecteur à enficher (12) forme un élément constitutif du corps isolant en plusieurs parties (29, 30) afin d'isoler électriquement la borne de phase primaire correspondante par rapport au boîtier (3) lors du fonctionnement de l'unité de mesure de haute tension (1, 1a).

6. Unité de mesure de haute tension selon la revendication 4 ou 5, **caractérisée en ce que** les portions d'adaptation (19) de type bride, sur au moins deux connecteurs à enficher (12), sont disposées dans un deuxième plan (25) en s'étendant parallèlement l'une à l'autre, le deuxième plan (25) étant disposé transversalement par rapport au premier plan (24), notamment perpendiculaire au premier plan (24).

7. Unité de mesure de haute tension selon l'une des revendications 1 à 6, **caractérisée en ce que** l'unité de mesure de haute tension (1, 1a) possède au moins trois bornes de phase primaires (5, 6, 7).

8. Unité de mesure de haute tension selon la revendication 7, **caractérisée en ce que** les au moins trois bornes de phase primaires (5, 6, 7) sont disposées dans le premier plan (24) en étant espacées les unes des autres d'un écart régulier (31).

9. Unité de mesure de haute tension selon l'une des revendications 1 à 8, **caractérisée en ce que** les portions d'adaptation (19) d'au moins deux ouvertures de raccordement (17) sont respectivement intégrées au moins partiellement dans une portion d'adaptation (19) commune.

10. Unité de mesure de haute tension selon l'une des revendications 1 à 9, **caractérisée en ce que** l'au moins un connecteur à enficher (12) possède une borne de contact (14) en forme de broche destinée à pénétrer dans un contact homologue (13) en forme de douille du module (2) voisin, la borne de contact (14) en forme de broche étant fixée dans la portion d'adaptation (19).

11. Unité de mesure de haute tension selon l'une des revendications 1 à 10, **caractérisée en ce que** l'au moins un connecteur à enficher (12) possède un élément formant douille (13) destiné à accueillir un contact homologue (14) en forme de broche du module (2) voisin, l'élément formant douille (13) étant fixé à la portion d'adaptation (19).

12. Unité de mesure de haute tension selon la revendication 1, **caractérisée en ce que** l'unité de mesure de haute tension est réalisée sous la forme d'un convertisseur de tension (1, 1a).

13. Équipement de commutation à isolement gazeux comprenant au moins une unité de mesure de haute tension (1, 1a) selon l'une des revendications 1 à 12.
